## Europäisches Patentamt

## European Patent Office

## Office européen des brevets

(11) Veröffentlichungsnummer: **0 318 086**
**B1**

(12) # EUROPÄISCHE PATENTSCHRIFT

(45) Veröffentlichungstag der Patentschrift:
22.08.90

(51) Int. Cl.⁵: **B01J 20/34**, B01D 53/34, C01B 17/04

(21) Anmeldenummer: 88202571.1

(22) Anmeldetag: 17.11.88

(54) Verfahren zum Regenerieren eines mit Schwefelsäure und Wasser beladenen kohlenstoffhaltigen Adsorbens.

(30) Priorität: 25.11.87 DE 3739909

(43) Veröffentlichungstag der Anmeldung:
31.05.89 Patentblatt 89/22

(45) Bekanntmachung des Hinweises auf die Patenterteilung:
22.08.90 Patentblatt 90/34

(84) Benannte Vertragsstaaten:
BE DE ES FR IT NL

(56) Entgegenhaltungen:
EP-A- 0 230 058
DE-A- 1 966 711
DE-A- 3 407 884
US-A- 3 789 110

(73) Patentinhaber: LABORATORIUM FÜR ADSORPTIONSTECHNIK GMBH, Gwinnerstrasse 27/33, D-6000 Frankfurt am Main(DE)

(72) Erfinder: Menig, Harald, Prof., Stettiner Strasse 97, D-6374 Steinbach(DE)
Erfinder: Cornel, Peter, Dr., Eschweger Strasse 1, D-6000 Frankfurt a.M.(DE)
Erfinder: Storp, Klaus, Dr., Fritz-Schubert-Ring 46, D-6000 Frankfurt a. M.(DE)
Erfinder: Hohmann, Volker, Frankenstrasse 36, D-6457 Maintal 4(DE)
Erfinder: Rittinger, Günter, Lessingstrasse 73, D-6367 Karben 6(DE)

(74) Vertreter: Rieger, Harald, Dr., Reuterweg 14, D-6000 Frankfurt a.M.(DE)

## Beschreibung

Die Erfindung betrifft ein Verfahren zum Regenerieren eines mit Schwefelsäure und Wasser beladenen, aus der Entschwefelung von Rauchgas kommenden kohlenstoffhaltigen Adsorbens in einem säulenförmigen Regenerator, den das beladene Adsorbens von oben nach unten als Schüttung durchwandert, wobei die Schwefelsäure mit schwefelhaltigem Reduktionsgas ($H_2S$ und/oder $CS_2$ und/oder COS) bei Temperaturen von 150 bis 300°C in einer Reduktionszone zu Elementarschwefel umgesetzt und der Elementarschwefel in einer Desorptionszone bei Temperaturen von 300 bis 600°C teilweise mit Wasserstoff zu Schwefelwasserstoff umgesetzt und der Rest mit Reduktionsgas vom Adsorbens entfernt wird, wobei man Elementarschwefel enthaltendes Reduktionsgas aus dem Bereich zwischen dem oberen Ende der Desorptionszone und dem unteren Ende der Reduktionszone abzieht, kühlt, Elementarschwefel auskondensiert und ableitet, und wobei man das von der Beladung weitgehend befreite Adsorbens vor der Wiederverwendung durch eine Kühlzone leitet.

Ein ähnliches Verfahren ist in der deutschen Offenlegungsschrift 34 07 884 und der dazu korrespondierenden, unter der Nummer 0 158 748 veröffentlichten Europa-Anmeldung beschrieben. Beim bekannten Verfahren arbeitet man mit zwei miteinander verbundenen Reduktionszonen und einem separaten Kühlgaskreislauf. Ein ähnliches Verfahren ist auch in der europäischen Anmeldung mit der Veröffentlichungsnummer 0 230 058 beschrieben, bei welchem es um die Entfernung von Stickstoffoxiden und Schwefeloxiden aus einem Rauchgas geht. Die Stickstoffoxide und ein Teil der Schwefeloxide werden an einen regenerierbaren $Al_2O_3$-Katalysator gebunden, während die restlichen Schwefeloxide durch Aktivkohle entfernt werden. Das beim Regenerieren der Aktivkohle entstehende $H_2S$-reiche Gas wird abgezogen und zum Regenerieren des beladenen Aluminiumoxids verwendet.

Der Erfindung liegt die Aufgabe zugrunde, das eingangs genannte Regenerierverfahren möglichst wirksam, flexibel und wirtschaftlich durchzuführen. Erfindungsgemäß geschieht dies dadurch, daß das beladene Adsorbens zunächst durch eine Trocknungszone wandert, deren Höhe 5 bis 30 % der Höhe der Schüttung im Regenerator beträgt, daß man das gekühlte, von auskondensiertem Elementarschwefel befreite Reduktionsgas erhitzt, einen Teilstrom des erhitzten Reduktionsgases mit Eintrittstemperaturen von etwa 250 bis 400°C in den Bereich zwischen Trocknungs- und Reduktionszone einleitet und daß man den Rest des erhitzten Reduktionsgases mit Eintrittstemperaturen von 400 bis 650°C der Desorptionszone zuführt, daß man das Adsorbens in der Trocknungszone durch aufwärts strömendes Reduktionsgas auf Temperaturen von 80 bis 150°C erwärmt, teilweise oder vollständig trocknet und anschließend das Adsorbens in die Reduktionszone leitet, daß man aus dem oberen Ende der Trocknungszone einen Teil des Reduktionsgases mit Temperaturen von 90 bis 160°C und praktisch frei von Elementarschwefel abzieht, in einem Kondensator kühlt, Wasserdampf auskondensiert und entfernt und gekühltes, vom Kondensator kommendes Reduktionsgas in die Kühlzone leitet. Als kohlenstoffhaltige Adsorbentien kommen z.B. Aktivkohlen, Aktivkokse oder Schwelkokse in Frage.

Bereits in der Trocknungszone beginnt die Reduktion der Schwefelsäure durch das $H_2S$-haltige Reduktionsgas nach der Reaktionsgleichung

$$H_2SO_4 + 3H_2S \rightarrow 4S + 4H_2O.$$

Das $H_2S$-haltige Reduktionsgas erzeugt man in der Desorptionszone durch Zufuhr von Wasserstoff, der mit einem Teil der Schwefelbeladung des Adsorbens bei Temperaturen von etwa 300 bis 600°C umgesetzt wird. Für diese Erzeugung von $H_2S$ werden etwa 75 % des insgesamt gebildeten Elementarschwefels mit Wasserstoff umgesetzt. Leitet man anstelle von Wasserstoff Kohlenwasserstoffe (z.B. $CH_4$) in die Desorptionszone, so setzen sie sich mit dem Schwefel und ggf. Wasserdampf etwa nach den Gleichungen

$$4S + CH_4 \rightarrow 2H_2S + CS_2$$

oder

$$4S + CH_4 + H_2O \rightarrow COS + 3H_2S$$

um. $CS_2$ und COS sind ebenfalls in der Lage, mit $H_2SO_4$ in der Reduktionszone Elementarschwefel zu bilden, wie das bereits in der DE-OS 34 07 884 beschrieben ist. In den nachfolgenden Erläuterungen wird davon ausgegangen, daß man das Reduktionsgas durch Einleiten von Wasserstoff in die Desorptionszone erzeugt.

Zur Optimierung der Gaszusammensetzung mischt man einen Teilstrom des vom Kondensator kommenden, gekühlten Reduktionsgases dem zwischen Reduktions- und Desorptionszone abgezogenen Reduktionsgas zu. Dadurch wird vor allem die Flexibilität des Verfahrens verbessert.

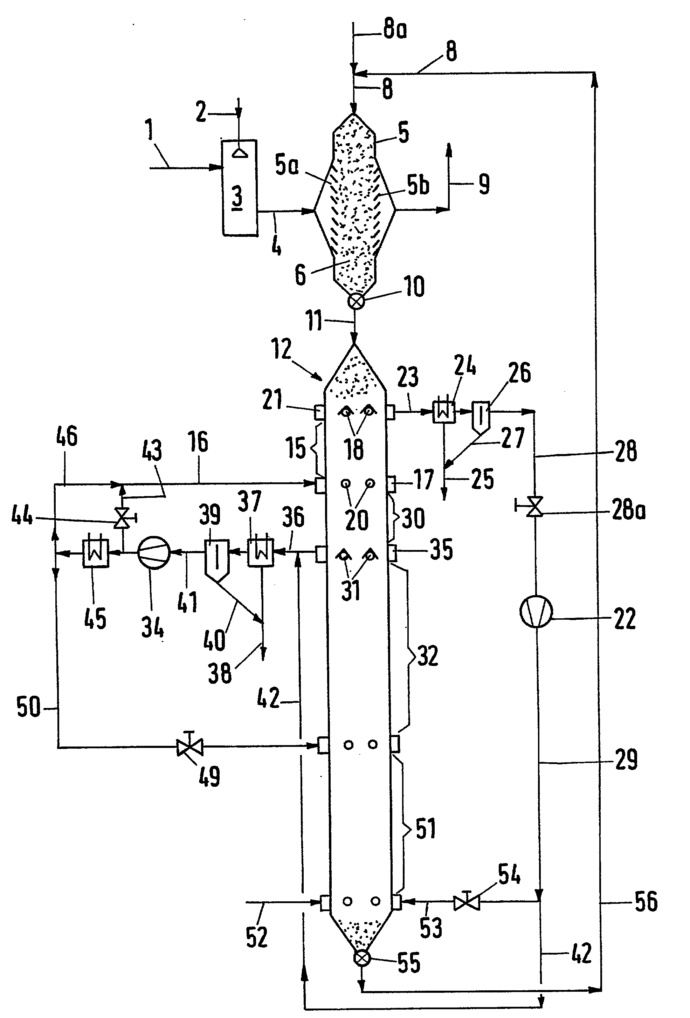

Ausgestaltungen des Verfahrens werden mit Hilfe der Zeichnung erläutert, dabei wird anstelle von "kohlenstoffhaltigem Adsorbens" der Einfachheit halber "Aktivkohle" gesagt.

In der Leitung (1) wird heißes Rauchgas herangeführt, es kommt z.B. aus einem Kraftwerk und weist üblicherweise Temperaturen im Bereich von etwa 130 bis 160°C auf, es enthält u.a. Wasserdampf und mehr Sauerstoff, als stöchiometrisch zum Umwandeln von $SO_2$ mit $H_2O$ zu $H_2SO_4$ nötig ist. Unter Eindüsen von Wasser aus der Leitung (2) erfolgt in einem Einspritzkühler (3) die Kühlung des Rauchgases auf Temperaturen im Bereich von etwa 50 bis 80°C, dabei wird die relative Wasserdampfsättigung des Rauchgases auf 35 bis 90 % und vorzugsweise 45 bis 60 % eingestellt. Dieses relativ kalte Rauchgas wird in der Leitung (4) dem Adsorber (5) zugeführt. Der Adsorber enthält zwischen zwei gasdurchlässigen, jalousieartigen Wänden (5a) und (5b) eine sich langsam nach unten bewegende Schüttung (6) aus körniger Aktivkohle. Die Korngröße der Aktivkohle liegt im Bereich von etwa 3 bis 15 mm. Regenerierte Aktivkohle kommt aus dem Zulauf (8), frische Aktivkohle, soweit erforderlich, wird durch die Leitung (8a) herangeführt.

Das von $SO_2$ weitgehend befreite Rauchgas strömt durch den Kamin (9) ab. Falls nötig, kann im zu entschwefelnden oder im entschwefelten Rauchgas eine an sich bekannte Einrichtung zum Entfernen von Stickstoffoxiden eingeschaltet sein.

Die gebrauchte, mit Schwefelsäure und Wasser beladene Aktivkohle wird über eine Abzugsvorrichtung (10) und eine Fördereinrichtung (11) einem säulenförmigen Regenerator (12) zugeführt. Im Regenerator bildet die Aktivkohle ebenfalls eine Schüttung, die sich langsam nach unten bewegt und von Regeneriergas durchströmt wird. Der Regenerator (12) ist in der Zeichnung schematisch im Längsschnitt dargestellt, ebenso wie der Adsorber (5).

Zunächst gelangt die Aktivkohle in eine Trocknungszone (15), der man in den unteren Bereich erhitztes Reduktionsgas aus der Leitung (16) zuführt. Das Reduktionsgas tritt durch die Ringleitung (17) und mehrere Öffnungen (20) mit Temperaturen von etwa 250 bis 400°C in den Regenerator (12) ein. Ein Teil des Reduktionsgases strömt in der Trocknungszone (15) im Gegenstrom zur beladenen Aktivkohle aufwärts, wobei zunächst das Wasser teilweise oder vollständig aus der Aktivkohle entfernt wird. Gleichzeitig wird der im Gas als Aerosol enthaltene Elementarschwefel an der Aktivkohle abgeschieden. Da das Reduktionsgas H$_2$S enthält, wird hier bereits auch ein gewisser Teil der H$_2$SO$_4$-Beladung der Aktivkohle reduziert.

In der Trocknungszone (15) herrschen maximale Temperaturen von 80 bis 150°C und vorzugsweise 100 bis 120°C. Da das Gas aus der Leitung (16) beim Eintritt in den Regenerator auf bereits vorgewärmte Aktivkohle trifft, wird eine schockartige Erwärmung derselben vermieden. Vorteilhafterweise entstehen durch Vermeidung des Kontaktes Aerosolschwefel enthaltenden Reduktionsgases mit kalter Aktivkohle oder kalten Apparateteilen keine Schwefelanbackungen, die sonst zur Blockierung des Wanderbettes oder zu sonstigen Verstopfungen führen könnten. Das Reduktionsgas kann also nur im Gegenstrom und nicht im Gleichstrom mit der Aktivkohle durch die Trocknungszone (15) geführt werden.

Das in der Trocknungszone (15) aufwärts strömende Reduktionsgas wird am oberen Ende der Trocknungszone durch die Auslässe (18) und die Ringleitung (21) mit Hilfe eines Gebläses (22) abgezogen und in der Leitung (23) zunächst zu einem Kondensator (24) geführt, in welchem man den Wasserdampf kondensiert. Elementarschwefel ist im Gas der Leitung (23) nicht enthalten. Die Höhe der Trocknungszone (15) beträgt 5 bis 30 % und vorzugsweise 10 bis 20 % der Höhe der Schüttung im Regenerator (12). Die Höhe der Trocknungszone wird so bemessen, daß das adsorbierte Wasser im gewünschten Umfang desorbiert wird.

Wäßriges Kondensat verläßt den Kondensator (24) in der Leitung (25), ein nachgeschalteter Tröpfchenabscheider (26), der das abgeschiedene Wasser über die Leitung (27) abführt, sorgt für weitere Entwässerung des abgezogenen Gases, das in der Leitung (28) abströmt.

Das restliche, H$_2$S-haltige Reduktionsgas, das in den Regenerator (12) durch die Öffnungen (20) eintritt, wird nach unten durch eine Reduktionszone (30) gesaugt. In der Zone (30) wird bei Temperaturen von 150 bis 300°C die H$_2$SO$_4$-Beladung der Aktivkohle vollständig zu Elementarschwefel reduziert. Dieser Zustand ist spätestens dann erreicht, wenn die Aktivkohle die Auslässe (31) am oberen Ende der Desorptionszone (32) erreicht hat. Von oben und unten durch ein Gebläse (34) angesaugtes Reduktionsgas gelangt über die Auslässe (31), die Ringleitung (35) und die Leitung (36) zu einem Kühler (37), in welchem Schwefeldämpfe kondensiert werden. Flüssiger Elementarschwefel fließt in der Leitung (38) ab, ein Teil des Aerosolschwefels wird im Tröpfchenabscheider (39) abgeschieden und in der Leitung (40) abgeleitet. Gekühltes Reduktionsgas mit Temperaturen von unter 100°C wird in der Leitung (42) herangeführt und dem Gas der Leitung (36) zugemischt.

Das vom Gebläse (34) in der Leitung (41) angesaugte Reduktionsgas enthält in feiner Verteilung noch geringe Schwefelreste. Ein Teilstrom des Gases, das etwa Temperaturen von 120 bis 150°C aufweist, wird in der Leitung (43) mit dem Regelventil (44) abgezweigt. Der Hauptteil des Gases gelangt zu einem Erhitzer (45) und wird dort auf Temperaturen von etwa 400 bis 650°C erhitzt. Einen ersten Teilstrom des heißen Reduktionsgases aus dem Erhitzer (45) mischt man über die Leitung (46) dem relativ kalten Gas der Leitung (43) zu und erzeugt so das Reduktionsgas, das in der Leitung (16) zur Trocknungszone (15) geführt wird. Der Rest des heißen Reduktionsgases wird in der Leitung (50) durch das Regelventil (49) dem unteren Bereich der Desorptionszone (32) zugeführt.

Der Kühlzone (51) führt man durch die Leitung (52) Wasserstoff sowie durch die Leitung (53) mit Regelventil (54) gekühltes Reduktionsgas zu. Dieses gekühlte Reduktionsgas wird über die Leitung (28) und das Regelventil (28a) vom Gebläse (22) angesaugt und über die Leitung (29) in die Leitungen (42) und (53) gedrückt. In den unteren Bereich der Desorptionszone (32) tritt somit ein aus der Kühlzone (51) kommendes, Wasserstoff enthaltendes Regeneriergas ein, wobei sich der Wasserstoff mit einem Teil der Schwefelbeladung der Aktivkohle zu H$_2$S umsetzt. Im oberen Bereich der Desorptionszone (32), wo Temperaturen von etwa 300 bis 500°C herrschen, ist diese Umsetzung durch Verbrauch des Wasserstoffs abgeschlossen, so daß dort ein Teil der Schwefelbeladung mit dem Reduktionsgas dampfförmig ausgetragen und über die Leitung (36) zum Schwefelkondensator (37) geführt wird.

Die von der Beladung befreite, gekühlte Aktivkohle gelangt ber eine Abzugsvorrichtung (55) auf dem Transportweg (56) zur Wiederverwendung zurück in den Zulauf (8).

BEISPIEL

Das Beispiel, dessen Daten teilweise berechnet sind, basiert auf der Entschwefelung von stündlich 500 000 m$^3$ Rauchgas mit Aktivkohle als Adsorptionskatalysator. (Alle in m$^3$ angegebenen Gasmengen sind bereits auf Nm$^3$ umgerechnet.) Diese Rauchgasmenge wird von einem mit Steinkohle gefeuerten Kraftwerk mit einer elektrischen Leistung von 150 MW/h erzeugt. Pro m$^3$ enthält das Rauchgas 3 300 mg SO$_2$, die bis auf höchstens 200 mg abgeschieden werden. Dabei ergibt sich eine Schwefelrückgewinnung von 775 kg/h.

Die weitere Erläuterung des Beispiels erfolgt mit Hilfe der in der Zeichnung dargestellten Verfahrensführung. Durch den Zulauf (8) werden dem Adsorber (5) stündlich 8 t regenerierte bzw. frische Aktivkohle zugeführt. Die gleiche Menge wird dem Regenerator (12) aufgegeben, wobei die Aktivkohle mit 2 400 kg $H_2SO_4$ und 2 400 kg Wasser beladen ist.

Die Trocknung der beladenen Aktivkohle und die Reduktion der Schwefelsäure erfordern pro Stunde 36 000 m³ Reduktionsgas, das durch die Leitung (16) mit 300°C herangeführt wird. Das Gas heizt die Aktivkohle in der Trocknungszone (15) auf mindestens 80 bis 150°C auf, dabei wird das Gas von seinem Gehalt an Aerosolschwefel befreit. Am oberen Ende der Trocknungszone (15) zieht man über die Leitung (23) 30 000 m³/h Reduktionsgas ab, das nach Kühlung auf 40°C und Entwässerung in einer Menge von 7 000 m³/h über die Leitung (53) der Kühlzone (51) zugeführt wird, der Rest gelangt durch die Leitung (42) zur Leitung (36). Über den Kühler (24) und den Abscheider (26) verlassen 4 000 kg/h wäßriges Kondensat das Regeneriersystem.

Durch die Reduktionszone (30) strömen pro Stunde 6 000 m³ Reduktionsgas und heizen die Aktivkohle auf mindestens 200°C auf. Dabei wird die $H_2SO_4$-Beladung unter Verbrauch von 1 600 m³/h $H_2S$ vollständig zu etwa 3 100 kg/h Elementarschwefel umgesetzt. 75 % dieses Elementarschwefels werden in der Desorptionszone (32) zur Erzeugung von $H_2S$ durch Umsetzung mit 1 600 m³/h Wasserstoff verbraucht. Der Wasserstoff wird über die Leitung (52) und die Kühlzone (51) herangeführt. Die restliche Beladung an Elementarschwefel wird desorbiert. Hierzu leitet man pro Stunde 26 000 m³ Reduktionsgas mit etwa 500°C durch die Leitung (50) in die Desorptionszone.

Der desorbierte Elementarschwefel ist dampfförmig und als Aerosol in dem über die Leitung (36) aus dem Regenerator abgezogenen Reduktionsgas enthalten. Das Gas wird im Kondensator (37) auf ca. 125°C gekühlt. Der dabei kondensierende Schwefel wird in einer Gesamtmenge von 775 kg/h aus dem Kondensator (37) und dem Abscheider (39) über die Leitungen (38) und (40) flüssig abgezogen. Seine Qualität entspricht der des Claus-Schwefels.

**Patentansprüche**

1. Verfahren zum Regenerieren eines mit Schwefelsäure und Wasser beladenen, aus der Entschwefelung von Rauchgas kommenden kohlenstoffhaltigen Adsorbens in einem säulenförmigen Regenerator, den das beladene Adsorbens von oben nach unten als Schüttung durchwandert, wobei die Schwefelsäure mit schwefelhaltigem Reduktionsgas ($H_2S$ und/oder $CS_2$ und/oder COS) bei Temperaturen von 150 bis 300°C in einer Reduktionszone zu Elementarschwefel umgesetzt und der Elementarschwefel in einer Desorptionszone bei Temperaturen von 300 bis 600°C teilweise mit Wasserstoff zu Schwefelwasserstoff umgesetzt und der Rest mit Reduktionsgas vom Adsorbens entfernt wird, wobei man Elementarschwefel enthaltendes Reduktionsgas aus dem Bereich zwischen dem oberen Ende der Desorptionszone und dem unteren Ende der Reduktionszone abzieht, kühlt, Elementarschwefel auskondensiert und ableitet, und wobei man das von der Beladung weitgehend befreite Adsorbens vor der Wiederverwendung durch eine Kühlzone leitet, dadurch gekennzeichnet, daß das beladene Adsorbens zunächst durch eine Trocknungszone wandert, deren Höhe 5 bis 30 % der Höhe der Schüttung im Regenerator beträgt, daß man das gekühlte, von auskondensiertem Elementarschwefel befreite Reduktionsgas erhitzt, einen Teilstrom des erhitzten Reduktionsgases mit Eintrittstemperaturen von etwa 250 bis 400°C in den Bereich zwischen Trocknungs- und Reduktionszone einleitet und daß man den Rest des erhitzten Reduktionsgases mit Eintrittstemperaturen von 400 bis 650°C der Desorptionszone zuführt, daß man das Adsorbens in der Trocknungszone durch aufwärts strömendes Reduktionsgas auf Temperaturen von 80 bis 150°C erwärmt, teilweise oder vollständig trocknet und anschließend das Adsorbens in die Reduktionszone leitet, daß man aus dem oberen Ende der Trocknungszone einen Teil des Reduktionsgases mit Temperaturen von 90 bis 160°C und praktisch frei von Elementarschwefel abzieht, in einem Kondensator kühlt, Wasserdampf auskondensiert und entfernt und gekühltes, vom Kondensator kommendes Reduktionsgas in die Kühlzone leitet.

2. Verfahren nach Anspruch 1, dadurch gekennzeichnet, daß man einen variablen Teilstrom des vom Kondensator kommenden, gekühlten Reduktionsgases dem zwischen Desorptions- und Reduktionszone abgezogenen Reduktionsgas zumischt.

3. Verfahren nach Anspruch 1 oder 2, dadurch gekennzeichnet, daß die Höhe der Trocknungszone 10 bis 20 % der Höhe der Schüttung im Regenerator beträgt.

**Claims**

1. A process of regenerating in a columnlike regenerator an adsorbent which is laden with sulphuric acid and water and comes from a desulphurization of flue gas and travels as a pile of bulk material through the regenerator from top to bottom, wherein the sulphuric acid is reacted with sulphur-containing reducing gas ($H_2S$ and/or $CS_2$ and/or CCS) at temperatures of 150 to 300°C in a reducing zone to form elementary sulphur, part of the elementary sulphur is reacted in a desorbing zone at temperatures of 300 to 600°C with hydrogen to form hydrogen sulphide and the remainder is removed with reducing gas from the adsorbent, reducing gas which contains elementary sulphur is withdrawn from the region between the top end of the desorbing zone and the bottom end of the reducing zone and is cooled and elementary sulphur is condensed out and drained and the adsorbent which has substantially been free of its loading is conducted before its reuse through a cooling zone, characterized in that the laden adsorbent first travels through a drying zone which has a height amounting to 5 to 30% of the height of the pile of bulk material in the regenerator, the cooled reducing gas from which the condensed-out elementary sulphur has been removed is heated, a partial stream of the heated reducing gas is fed to the region between the drying and reducing zones at entrance temperatures of about 250 to 400°C and the remainder of the heated reducing gas is fed to the desorbing zone at entrance temperatures of 400 to 650°C, the adsorbent is heated in the drying zone by rising reducing gas to temperatures of 80 to 150°C and is partly or completely dried and the adsorbent is subsequently fed to the reducing zone, part of the reducing gas, which is at temperatures of 90 to 160°C and virtually free of elementary sulphur, is removed from the top end of the drying zone and is cooled in a condenser, water vapour is condensed out and removed and cooled reducing gas coming from the condenser is fed to the cooling zone.

2. A process according to claim 1, characterized in that a variable partial stream of the cooled reducing gas coming from the condenser is admixed to the reducing gas which has been withdrawn between the desorbing and reducing zones.

3. A process according to claim 1 or 2, characterized in that the height of the drying zone is 10 to 20% of the height of the bed of bulk material in the regenerator.

**Revendications**

1. Procédé de régénération d'un adsorbant carbonacé, chargé d'acide sulfurique et d'eau et provenant de la désulfuration des gaz de fumée, dans un régénérateur en forme de colonne, dans lequel l'adsorbant chargé passe de haut en bas sous la forme d'un tas, l'acide sulfurique étant transformé en soufre élémentaire par un gaz réducteur soufré ($H_2S$ et/ou $CS_2$ et/ou COS) à des températures de 150 à 300°C dans une zone de réduction et le soufre élémentaire étant transformé dans une zone de désorption à des températures de 300 à 600°C partiellement, par de l'hydrogène, en de l'hydrogène sulfuré et le reste étant éliminé de l'adsorbant par du gaz réducteur, le gaz réducteur contenant du soufre élémentaire étant soutiré de la partie comprise entre l'extrémité supérieure de la zone de désorption et l'extrémité inférieure de la zone de réduction refroidi, débarrassé par condensation du soufre élémentaire et évacué et l'adsorbant sensiblement débarrassé de la charge étant envoyé, avant d'être réutilisé dans une zone de refroidissement, caractérisé en ce que l'on fait passer d'abord l'adsorbant chargé dans une zone de séchage, dont la hauteur représente de 5 à 30% de la hauteur du tas dans le régénérateur, en ce que l'on chauffe le gaz réducteur refroidi et débarrassé du soufre élémentaire qui s'est séparé par condensation, on envoie un courant partiel du gaz réducteur chauffé ayant des températures d'entrée de 250 à 400°C environ, dans la partie comprise entre la zone de séchage et la zone de réduction et l'on envoie le reste du gaz réducteur chauffé, avec des températures d'entrée de 400 à 650°C, à la zone de désorption, on porte l'adsorbant dans la zone de séchage à des températures de 80 à 150°C par du gaz réducteur ascendant, on le sèche partiellement ou complètement et on envoie ensuite l'adsorbant dans la zone de réduction, en ce que l'on soutire de l'extrémité supérieure de la zone de séchage une partie du gaz réducteur ayant des températures de 90 à 160°C et pratiquement exempte de soufre élémentaire, on la refroidit dans un condenseur, on en sépare par condensation et on en élimine de la vapeur d'eau et on envoie le gaz réducteur refroidi provenant du condenseur à la zone de refroidissement.

2. Procédé suivant la revendication 1, caractérisé en ce que l'on mélange un courant partiel variable du gaz réducteur, refroidi et provenant du condenseur, au gaz réducteur soutiré entre la zone de désorption et la zone de réduction.

3. Procédé suivant la revendication 1 ou 2, caractérisé en ce que la hauteur de la zone de séchage représente de 10 à 20% de la hauteur du tas dans le régénérateur.